(19) **Europäisches Patentamt**

**European Patent Office**

**Office européen des brevets**

(11) **EP 1 378 537 A1**

(12) **EUROPÄISCHE PATENTANMELDUNG**

(43) Veröffentlichungstag:
**07.01.2004 Patentblatt 2004/02**

(51) Int Cl.7: **C08J 5/18**, C09D 151/00,
G02B 5/128

(21) Anmeldenummer: **03013087.6**

(22) Anmeldetag: **11.06.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **02.07.2002 DE 10229732**

(71) Anmelder: **BASF AKTIENGESELLSCHAFT
67056 Ludwigshafen (DE)**

(72) Erfinder:
• **Leyrer, Reinhold J., Dr.
67125 Dannstadt (DE)**
• **Hamers, Christoph, Dr.
67071 Ludwigshafen (DE)**
• **Schöpke, Holger, Dr.
69151 Neckargemünd (DE)**
• **Ritter, Helmut, Prof. Dr.
42111 Wuppertal (DE)**
• **Löwen, Hartmut, Prof. Dr.
41469 Neuss (DE)**

(54) **Optische Anzeigenelemente auf Basis wässriger Polymerdispersion**

(57) Optische Anzeigenelemente, enthaltend eine Schicht aus einem verformbaren Material (Matrix) und diskreten Polymerteilchen, welche gemäß einer definierten Raumgitterstruktur in der Matrix verteilt sind.

EP 1 378 537 A1

## Beschreibung

Die Erfindung betrifft optische Anzeigenelemente, enthaltend eine Schicht aus einem verformbaren Material (Matrix) und diskreten Polymerteilchen, welche gemäß einer definierten Raumgitterstruktur in der Matrix verteilt sind.

Es handelt sich dabei um eine Raumgitterstruktur wie sie auch in Kristallen gegeben ist.

Im zunehmendem Maße werden in optischen Anzeigen organische Materialien verwendet. Diese Materialien sind im allgemeinen in der Handhabung vorteilhaft.

Optische Signale werden bei organischen Materialien durch Ausnutzung unterschiedlichster physikalischer und chemischer Eigenschaften erzeugt.

Bei Flüssigkristallanzeigen beruht die Wirkungsweise z.B. auf einer Umorientierung der Moleküle im elektrischen Feld.

Bei OLED-(organic light emitting diode) Anzeigen wird Licht emitierendes organisches Material verwendet.

Zu den bisher bekannten optischen Anzeigenelementen auf Basis organischer Materialien werden Alternativen gesucht, die möglichst viele der nachstehenden Anforderungen erfüllen:

- leichte Zugänglichkeit des organischen Materials
- preiswertes organisches Material
- problemlose Entsorgung des organischen Materials
- einfaches Funktionsprinzip der Anzeige und daher problemloser Betrieb

Optische Anzeigen auf Basis organischer Materialien, welche die vorstehenden Eigenschaften erfüllen, können auch in großflächiger Ausführung, z.B. als Reklametafel Verwendung finden.

Wässrige Polymerdispersionen sind preiswerte, leicht herstellbare organische Materialien. Aus DE-A 19717879 und DE-A 19820302 war bekannt, dass sich Polymerdispersionen zur Herstellung von Effektfarbmitteln eignen.

Aufgabe der vorliegenden Erfindung waren optische Anzeigen auf Basis organischer Materialien, welche möglichst viele der obigen Anforderungen erfüllen.

Demgemäß wurden die eingangs definierten optischen Anzeigenelemente gefunden.

Die optischen Anzeigenelemente enthalten als wesentlichen Bestandteil eine Schicht aus einem verformbaren Material (Matrix) und diskreten Polymerteilchen, welche gemäß einer definierten Raumgitterstruktur in der Matrix verteilt sind.

Zu den Polymerteilchen

Zur Ausbildung einer definierten Raumgitterstruktur sollen die diskreten Polymerteilchen möglichst gleich groß sein. Ein Maß für die Einheitlichkeit der Polymerteilchen ist der sogenannte Polydispersitätsindex, berechnet nach der Formel

$$P.I.=(D_{90}-D_{10})/D_{50}$$

worin $D_{90}$, $D_{10}$ und $D_{50}$ Teilchendurchmesser bezeichnen, für die gilt:

$D_{90}$:90 Gew.% der Gesamtmasse aller Teilchen hat einen Teilchendurchmesser kleiner oder gleich D 90
$D_{50}$:50 Gew.% der Gesamtmasse aller Teilchen hat einen Teilchendurchmesser kleiner oder gleich D 50
$D_{10}$:10 Gew.% der Gesamtmasse aller Teilchen hat einen Teilchendurchmesser kleiner oder gleich D 10

Weitere Erläuterungen zum Polydispersitätsindex finden sich z.B. in DE-A 19717879 (insbesondere Zeichnungen Seite 1).

Die Teilchengrößenverteilung kann in an sich bekannter Weise, z.B. mit einer analytischen Ultrazentrifuge (W. Mächtle, Makromolekulare Chemie 185 (1984) Seite 1025 - 1039) bestimmt werden und daraus der D 10, D 50 und D 90-Wert entnommen und der Polydispersitätsindex - bestimmt werden.

Die Polymerteilchen haben bevorzugt einen D 50-Wert im Bereich um 0,05 bis 5 µm. Es kann sich bei den Polymerteilchen um eine Teilchensorte oder mehrere Teilchensorten mit unterschiedlichem D 50-Wert handeln, wobei jede Teilchensorte einen Polydispersitätsindex bevorzugt kleiner 0,6, besonders bevorzugt kleiner 0,4 und ganz besonders bevorzugt kleiner 0,3 und insbesondere kleiner 0,15 hat.

Insbesondere bestehen die Polymerteilchen nun aus einer einzigen Teilchensorte. Der D 50-Wert liegt dann vorzugsweise zwischen 0,05 und 2 µm, besonders bevorzugt liegt er zwischen 100 und 400 Nanometer.

Auch Polymerteilchen, welche z.B. aus 2 oder 3, vorzugsweise 2 hinsichtlich des D 50-Wertes unterschiedlichen Teilchensorten bestehen, können eine gemeinsame Gitterstruktur bilden (kristallisieren) sofern für jede Teilchensorte die obige Bedingung hinsichtlich des Polydispersitätsindexes erfüllt ist. geeignet sind z.B. Gemische in Teilchensorten mit einem D 50-Wert von 0,3 bis 0,5 µm und mit einem D 50-Wert von 0,1 bis 0,3 µm

Die Polymerteilchen bestehen vorzugsweise aus einem Polymer mit einer Glasüberganstemperatur größer 30 °C, besonders bevorzugt größer 50 °C und ganz besonders bevorzugt größer 70 °C, insbesondere größer 90 °C.

Die Glasübergangstemperatur läßt sich nach üblichen Methoden wie Differentialthermoanalyse oder Differentail Scanning Calorimetrie (s. z.B. ASTM 3418/82, sog. "midpoint temperature") bestimmen.

Das Polymer besteht vorzugsweise zu mindestens 40 Gew.-%, bevorzugt zu mindestens 60 Gew.-%, besonders bevorzugt zu mindestens 80 Gew.-% aus sogenannten Hauptmonomeren.

Die Hauptmonomeren sind ausgewählt aus

$C_1$-$C_{20}$-Alkyl (meth) acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z.B. (Meth)acrylsäurealkylester mit einem

$C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, a- und p-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinyl-isobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Butadien, Isopren und Chloropren genannt, mit einer Doppelbindung z.B. Ethylen oder Propylen.

Als Hauptmonomere bevorzugt sind die $C_1$- bis $C_{20}$-Alkylacrylate und -methacrylate, insbesondere $C_1$- bis $C_8$-Alkylacrylate und -methacrylate, Vinylaromaten, insbesondere Styrol, und deren Mischungen, insbesondere auch Mischungen der Alkyl(meth)acrylate und Vinylaromaten.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Die Polymerteilchen sind vorzugsweise chemisch vernetzt. Dazu können Monomere mit mindestens zwei polymerisierbaren Gruppen, z.B. Divinylbenzol oder Allylmethacrylat, mitverwendet erden (interne Vernetzung). Es können aber auch Vernetzer zugesetzt werden (externe Vernetzung).

Zur Matrix

Zwischen der Matrix und den Polymeren sollte ein Unterschied im Brechungsindex bestehen.

Bevorzugt sollte der Unterschied mindestens 0,01, besonders bevorzugt mindestens 0,1 betragen.

Dabei kann sowohl die Matrix als auch das Polymer den höheren Brechungsindex haben. Entscheidend ist, dass ein Unterschied besteht.

Die Matrix besteht aus einem verformbaren Material. Unter Verformbarkeit wird verstanden, dass die Matrix eine räumliche Verschiebung der diskreten Polymerteilchen bei Anwendung äußerer Kräfte (z. B. mechanisch, elektromagnetisch) erlaubt.

Bevorzugt besteht daher die Matrix aus einem organischen Material, bzw. organischen Verbindungen mit einem Schmelzpunkt oder eine Glasüberganstemperatur unterhalb 20 °C, besonders bevorzugt unterhalb 10 °C, ganz besonders bevorzugt unterhalb 0 °C (bei 1 bar).

Es kommen auch organische Verbindungen mit einem Schmelzpunkt oder einer Glasübergangstemperatur (Tg) oberhalb 20°C in Betracht, hierbei ist jedoch ein zwischenzeitliches Aufheizen oberhalb des Schmelzpunktes oder der Tg erforderlich, wenn die Abstände der Polymerteilchen geändert werden sollen (siehe unten).

In Betracht kommen Flüssigkeiten wie Wasser oder höher viskose Flüssigkeiten wie Glycerin oder Glycol.

Bevorzugt sind polymere Verbindungen, z.B. Polykondensate, Polyaddukte oder durch radikalische Polymerisation erhältlich Polymere.

Genannt seien z.B. Polyester, Polyamide, Formaldehydharze, wie Melamin-, Harnstoff- oder Phenol-Formaldehydkondensate, Polyepoxide, Polyurethane, oder auch die oben genannten Polymere, welche die aufgeführten Hauptmonomere enthalten, z.B. Polyacrylate, Polybutadiene, Styrol-/Butadiencopolymerisate.

Zur Herstellung

Herstellungsmethoden sind in DE-A 19717879 und DE-A 19820302 beschrieben.

Herstellung der diskreten Polymerteilchen.

Die Herstellung der Polymerteilchen, bzw. Polymeren erfolgt in einer bevorzugten Ausführungsform durch Emulsionspolymerisation, es handelt sich daher um ein Emulsionspolymerisat.

Die Emulsionspolymerisation ist insbesondere bevorzugt, weil so Polymerteilchen mit gleichmäßiger Kugelform erhältlich sind.

Die Herstellung kann jedoch z.B. auch durch Lösungspolymerisation und anschließende Dispergierung in Wasser erfolgen.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/ Eisen (II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z. B. die Reduktionskomponente, können auch Mischungen sein z.B. eine Mischung aus dem Natriumsalz der Hydroxymethansulfinsäure und Natriumdisulfit.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Eine einheitliche Teilchengrößenverteilung, d.h. ein geringer Polydispersitätsindex ist durch den Fachmann bekannte Maßnahmen erhältlich, z.B. durch Variation der Menge der grenzflächenaktiven Verbindung (Emulgator oder Schutzkolloide) und/oder entsprechende Rührergeschwindigkeiten.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Herstellung der Mischung Polymerteilchen / Matrix (Schicht)

Wasser oder Lösemittel als Matrix

Bei der Emulsionspolymerisation wird direkt eine wässrige Dispersion der Polymerteilchen erhalten. Das Wasser kann einfach soweit entfernt werden bis sich die Gitterstruktur der Polymerteilchen, erkennbar an den dabei zu beobachtenden farblichen Effekten, einstellt.

Sind andere Lösemittel gewünscht, kann Wasser in einfacher Weise gegen diese Lösemittel ausgetauscht werden.

Polymere Verbindungen als Matrix

Die bei der Emulsionspolymerisation erhaltene wässrige Dispersion der diskreten Polymerteilchen kann mit der zur Einstellung der Gitterstruktur benötigten Menge der polymeren Verbindung gemischt und anschließend das Wasser entfernt werden. Aufgrund der oftmals hohen Viskosität der polymeren Verbindung kann es vorteilhaft sein, die Polymerteilchen zunächst mit den Aufbaukomponenten der polymeren Verbindung zu mischen und dann, nach erfolgter Dispergierung der Polymerteilchen, diese Aufbaukomponenten z.B. durch Kondensation, Adduktbildung zu den polymeren Verbindungen umzusetzen.

Emulsionspolymerisate als diskrete Polymerteilchen und Emulsionspolymerisate als Matrix

Die entsprechenden Emulsionspolymerisate können einfach gemischt und anschließend das Wasser entfernt werden. Soweit die Emulsionspolymerisate für die Matrix eine Glasübergangstemperatur unter 20 °C haben (siehe oben), verfilmen die Polymerteilchen bei Raumtemperatur und bilden die durchgehende Matrix, bei höherer Tg ist eine Erwärmung auf Temperaturen oberhalb der Tg erforderlich.

Besonders einfach und vorteilhaft ist es, beide Emulsionspolymerisate in einem Schritt als Kern/Schale-Polymerisat herzustellen. Dazu wird die Emulsionspolymerisation 2-stufig durchgeführt. Zunächst werden die Monomeren polymerisiert, welche den Kern (= spätere diskrete Polymerteilchen) bilden, dann werden in einer 2. Stufe in Gegenwart des Kerns die Monomeren polymerisiert, welche die Schale (= spätere Matrix) bilden.

Bei der späteren Entfernung des Wassers verfilmt die weiche Schale, deren Glasübergangstemperatur unter 20 °C liegt und die verbleibenden (harten) Kerne sind als diskrete Polymerteilchen in der Matrix verteilt.

Die polymeren Verbindungen können auch vernetzt werden, so dass sie elastische Eigenschaften haben. Soweit Vernetzung gewünscht ist, erfolgt sie vorzugsweise bei oder nach der Verfilmung, zum Beispiel durch thermisch oder photochemisch ausgelöste Vernetzungsreaktion eines Vernetzers, der zugesetzt wird oder bereits an das Polymer gebunden sein kann.

Die Vernetzung der Matrix bewirkt eine Rückstellkraft, welche auf die diskreten Polymerteilchen wirkt. Ohne Einwirkung äußerer Kräfte nehmen die Polymerteilchen dann wieder die vorgegebene Ausgangsposition ein.

Zum Aufbau der Schicht

Die Schicht verursacht einen optischen Effekt, das heißt eine zu beobachtende Reflexion durch Interferenz des an den Polymerteilchen gestreuten Lichts.

Die Wellenlänge der Reflexion kann dabei je nach Abstand der Polymerteilchen im gesamten elektromagnetischen Spektrum liegen. Vorzugsweise liegt die Wellenlänge im UV-Bereich, IR-Bereich und insbesondere im Bereich des sichtbaren Lichts.

Die Wellenlänge der zu beobachtenden Reflexion hängt dabei nach der bekannten Bragg-Gleichung von dem Netzebenenabstand, hier der Abstand zwischen den in einer Raumgitterstruktur in der Matrix angeordneten Polymerteilchen, ab.

Damit sich die gewünschte Raumgitterstruktur mit dem gewünschten Abstand zwischen den Polymerteilchen einstellt, ist insbesondere der Gewichtsanteil der Matrix entsprechend zu wählen. Bei den vorstehend beschriebenen Herstellmethoden sollten die organischen Verbindungen, z.B. polymere Verbindungen in entsprechender Menge eingesetzt werden.

Der Gewichtsanteil der Matrix wird insbesondere so bemessen, dass eine Raumgitterstruktur der Polymerteilchen entsteht, welche elektromagnetische Strahlung im gewünschten Bereich reflektiert.

Der Abstand zwischen den Polymerteilchen (jeweils bis zum Mittelpunkt der Teilchen) beträgt geeigneterweise 100 bis 400 nm, wenn ein Farbeffekt, d.h. eine Reflexion im Bereich des sichtbaren Lichts gewünscht ist.

Zu den optischen Anzeigenelementen

Die Schicht befindet sich im allgemeinen zwischen Substraten, von denen mindestens ein Substrat transparent ist.

Bei letzterem handelt es sich z.B. um eine transparente Glasplatte oder Polymerfolie.

Das Licht fällt durch das transparente Substrat ein und wird vorzugsweise auch wieder durch dieses transparente Substrat reflektiert.

Bei dem anderen Substrat auf der gegenüberliegenden Seite kann es sich daher um ein Substrat mit einer Lichtdurchlässigkeit kleiner 50 %, z.B. ein farbiges, auch schwarzes Substrat, z.B. eine entsprechend eingefärbte Glasplatte oder Polymerfolie, handeln.

Für den optischen Effekt reicht eine Bragg-Reflexion in den ersten Kristallgitterebenen der Schicht aus. Daher kann auch die Schicht, insbesondere die tiefer liegenden Ebenen, eingefärbt, z.B. auch schwarz sein.

Die Schicht kann auch eingefärbt sein, um einen gewünschten farblichen Grundton zu erzeugen.

Die Dicke der Schicht kann vorzugsweise 1 μm bis 150 μm, besonders bevorzugt 1 bis 50 μm betragen.

Optische Signale werden durch Änderung der Abstände der Polymerteilchen erzeugt.

In den optischen Anzeigenelementen ist daher die Wellenlänge des reflektierten Lichts durch Änderung des Abstands der Polymerteilchen veränderbar. Die Veränderung kann z.B. thermisch, mechanisch, elektrisch, magnetisch, elektromagnetisch oder durch Ausnetzung des Piezo-Effekts erfolgen.

Dazu werden oberhalb und gegebenenfalls unterhalb der Schicht Vorrichtungen angebracht, die entsprechende thermische, mechanische, elektrische, magnetische, elektromagnetische Effekte erzeugen.

Bevorzugt ist der Abstand der Polymerteilchen örtlich kontrolliert veränderbar. Zum Beispiel wird dazu die Schicht in ein Rasterfeld unterteilt und jeder Rasterpunkt kann durch eine entsprechende Vorrichtung unabhängig beeinflußt und gesteuert werden.

Auf diese Weise werden bildliche Darstellungen erzeugt.

Bei auch zeitlicher Veränderbarkeit und Steuerung ergeben sich bewegliche Bilder.

Die kontrollierte örtliche und gegebenenfalls zeitliche Veränderung der Abstände der Polymerteilchen kann z.B. erreicht werden durch auf der Ober- und Unterseite der Schicht aufgebrachte leitfähige Elemente. Insbesondere können sich auf einer Seite der Schicht parallel verlaufende leitfähige Elemente und auf der anderen Seite der Schicht ebenfalls parallel verlaufende, aber quer zu den Elementen der anderen Seite angebrachte Elemente befinden. Durch separate Steuerung jedes Elements können bei entgegengesetzter Spannung auf beiden Seiten die Bereiche der Schicht, welche den Kreuzungspunkten der leitfähigen Elemente entsprechen, gezielt angesteuert werden. So ist der Abstand der Polymerteilchen im Bereich der Kreuzungspunkte unabhängig örtlich und zeitlich steuerbar.

Die kontrollierte örtliche und gegebenenfalls zeitliche Veränderung der Abstände der Polymerteilchen kann auch durch Transistoren bewirkt werden, die sich zumindest an einer Seite der Schicht befinden.

Zusätzlich sei noch auf folgende besondere Ausführungsformen verwiesen:

- vernetzte Matrix

   Hier wirken auf die Polymerteilchen Rückstellkräfte. Ohne Einwirkung äußerer Kräfte nehmen die Polymerteilchen wieder die Ausgangsposition ein. Eine vernetzte Matrix eignet sich daher besonders, wenn z.B. im ausgeschalteten Zustand eine gleichbleibende Anzeige des Displays gewünscht ist, wozu dann keine Energie benötigt wird.

- Matrix mit Schmelzpunkt oder Tg oberhalb 20°C.

   Vor Veränderung der Abstände der Polymerteilchen muss die Schicht auf über 20°C aufgeheizt werden. Bei der höheren Temperatur kann dann eine Abständsänderung durch äußere Kräfte vorgenommen werden. Nach Abkühlen unter 20°C wird der Zustand eingefroren. Eine Matrix mit Tg oder Schmelzpunkt oberhalb 20°C ist daher vorteilhaft für eine dauerhafte Anzeige mit hoher Stabilität, welche allenfalls gelegentlich geändert wird.

Die erfindungsgemäßen optischen Anzeigeelemente können nicht nur zur Herstellung von farbigen Bildern, von sich zeitlich verändernden Bildern, Filmen sondern auch zur Herstellung von monochromatischem Laserlicht oder zur wellenlängenabhängigen Kontrolle von Datenüberträgern auf elektromagnetischer Basis verwendet werden.

Insbesondere eignen sich die optischen Anzeigeelemente auch für großflächige Anzeigetafeln, z.B. Reklametafeln, wobei die Fläche des gezeigten Bildes größer als 0,2 $m^2$, insbesondere größer als 0,5 und größer als 1 $m^2$ sein kann.

Vorteile der erfindungsgemäßen optischen Anzeigeelemente bestehen in der leichten Zugänglichkeit, der leichten Handhabung, der Preiswertigkeit und der problemlosen Entsorgung des organischen Materials, dem einfachen Funktionsprinzip und dem damit verbundenen problemlosen Betrieb der Anzeigen und der Sparsamkeit im Energieverbrauch.

Beispiele

Herstellung der Polymeren

Die folgenden Ausführungsbeispiele veranschaulichen die Erfindung. Die in den Beispielen benutzten Emulgatoren haben folgende Zusammensetzungen:
Emulgator 1:30 Gew.-%ige Lösung des Natriumsalzes eines ethoxylierten und sulfatierten Nonylphenols mit ca. 25 mol/mol Ethylenoxyd-Einheiten.
Emulgator 2:40 Gew.-%ige Lösung eines Natriumsalzes eines C12/C14-Paraffinsulfonates.
Emulgator 3:15 Gew.-%ige Lösung von linearem Natriumdodecylbenzolsulfonat.
Die Teilchengrößen-Verteilungen wurden mit Hilfe einer analytischen Ultrazentrifuge oder mit Hilfe der kapillarhydrodynamischen Fraktionierungsmethode (CHDF 1100 Particle Size Analyzer der Fa. Matec Applied Sciences) bestimmt, und aus den erhaltenen Werten der P.I.- Wert nach der hier angegebenen Formel

$$\text{P.I.} = (D_{90} - D_{10}) / D_{50}$$

berechnet. Lösungen sind, soweit nichts Anderes angegeben ist, wäßrige Lösungen.
Die in den Beispielen verwendete Angabe pphm bedeutet Gew.-Teile bezogen auf 100 Gew.-Teile Gesamtmonomere.
Die für Monomere verwendeten Abkürzungen haben folgende Bedeutungen: AS = Acrylsäure, n-BA = n-Butylacrylat, DVB = Divinylbenzol, EA = Ethylacrylat, MAS = Methacrylsäure, MAMol = N-Methylolmethacrylamid, NaPS = Natriumpersulfat.

Beispiel 1: Herstellung eines Emulsionspolmerisats

In einem mit Ankerrührer, Thermometer, Gaseinleitungsrohr, Tropftrichter und Rückflußkühler versehenen Glasreaktor wird eine Dispersion von 0,9 g (0,20 pphm) Polystyrol-Saat (Partikelgröße: 30 nm) in 500 ml Wasser vorgelegt und unter Rühren in einem Heizbad erwärmt, wobei gleichzeitig die Luft durch Einleiten von Stickstoff verdrängt wird. Wenn das Heizbad die voreingestellte Temperatur von 85 °C und der Reaktorinhalt die Temperatur von 80 °C erreicht hat, wird die Stickstoffeinleitung unterbrochen und es werden gleichzeitig im Verlauf von 3 Stunden eine Emulsion von 445,5 g Styrol (99.0 Gew.-%), 4,5 g Divinylbenzol (1.0 Gew.-%) und 14,5 g Emulgator 1 (1,0 pphm) in 501,3 ml Wasser und 54,0 g einer 2,5 gew.- %igen wäßrigen Lösung von Natriumpersulfat (0,3 pphm) zutropfen lassen. Nach vollständigem Zulauf der Lösungen wird die Polymerisation noch 7 Stunden bei 85 °C fortgesetzt und anschließend auf Zimmertemperatur abgekühlt.
Die Dispersion hat folgende Eigenschaften:

| Feststoffgehalt | 29,6 Gew.-% |
|---|---|
| Partikelgröße | 255 nm |
| Koagulatanteil | < 1 g |
| pH-Wert | 2.3 |
| Polydispersitätsindex | 0,13 |
| Brechungsindex | 1,59 |

Dieses Beispiel wurde mehrfach wiederholt, wobei die Konzentration der Saatpartikel variiert wurde. Die folgende Tabelle 1 gibt eine Übersicht über die erhaltenen Versuchsergebnisse.

Tabelle 1

| Beisp. Nummer | 1A | 1B | 1C | 1D | 1E | 1F | 1G |
|---|---|---|---|---|---|---|---|
| Saat-Konz. Gew.%. | 0,20 | 0,15 | 0,10 | 0,053 | 0,30 | 0,53 | 3,16 |

Tabelle 1  (fortgesetzt)

| Beisp. Nummer | 1A | 1B | 1C | 1D | 1E | 1F | 1G |
|---|---|---|---|---|---|---|---|
| Festst Gehalt Gew.% | 28,8 | 28,4 | 28,5 | 29,4 | 29,3 | 30,0 | 28,6 |
| Part.-Größe [um] | 256 | 280 | 317 | 357 | 222 | 188 | 125 |
| P.I. | 0,13 | - | - | 0,19 | - | - | 0,221 |

Beispiel 2: Herstellung eines Emulsionspolymerisats mit Kern/ Schale-Aufbau.

In einem mit Ankerrührer, Thermometer, Gaseinleitungsrohr, Tropftrichter und Rückflußkühler versehenen Glasreaktor werden 300 g der in Beispiel 1A erhaltenen Dispersion von Kernpartikeln vorgelegt und unter Rühren in einem Heizbad erwärmt, wobei gleichzeitig die Luft durch Einleiten von Stickstoff verdrängt wird.

Wenn das Heizbad die voreingestellte Temperatur von 85 °C und der Reaktorinhalt die Temperatur von 80°C erreicht hat, wird die Stickstoffeinleitung unterbrochen und es werden gleichzeitig im Verlauf von 1,5 Stunden.

a) eine Mischung von 84,7 g (98,0 Gew.-%) n-Butylacrylat, 0,86 (1,0-Gew% ) Acrylsäure, 5,76 g (1,0 Gew.-%) einer 15 gew.-%igen Lösung von N-Methylolmethacrylamid, 2,86 g einer 31 gew.-%igen Lösung (0,97 pphm) des Emulgators 1 und 12.4 g Wasser sowie

b) 17,3 g einer 2,5 gew.-%igen wäßrigen Lösung von Natriumpersulfat (0,5 pphm) zugetropft.

Nach vollständigem Zulauf der Lösungen wird die Polymerisation noch 3 Stunden bei 85 °C fortgesetzt. Danach wird die erhaltene Dispersion von Kern/Schale-Partikeln auf Zimmertemperatur abgekühlt.

Die Dispersion hat folgende Eigenschaften:

| | |
|---|---|
| Feststoffgehalt: | 40,6 Gew.-% |
| Partikelgröße: | 307 nm |
| Polydispersitätsindex (PI) : | 0,16 |
| Gewichtsverhältnis Kern : Schale: | 1:1 (berechnet) |
| Brechungsindex des Schalenpolymers-. | 1,44 |

Dieses Beispiel wurde noch zweimal wiederholt, wobei die Konzentration der Kernpartikel und das Gewichtsverhältnis von Kern/ Schale variiert wurde. Die folgende Tabelle 2 gibt eine Übersicht über die erhaltenen Versuchsergebnisse.

Tabelle 2

| Beisp. Nummer | 2A | 2B | 2C |
|---|---|---|---|
| Kernanteil (Gew.-Teile) | 100,0 | 133,3 | 225,0 |
| n-BA [Gew.-%] | 98, 0 | 98,0 | 98,0 |
| AS (Gew.-%] | 1,0 | 1,0 | 1,0 |
| MAMol [Gew.-%] | 1,0 | 1,0 | 1,0 |
| Schale:Kern-Verhältnis | 1:1 | 0,75:1 | 0,44:1 |
| Partikelgröße [nml | 301 | 308 | 284 |
| P.I. | 0,162 | 0,137 | 0,144 |
| Feststoffgchalt [Gew.-%] | 39,4 | 40,6 | 35,2 |

Gew.-% für nBA, AS und MAMol sind auf die Schale bezogen.

Herstellung einer reflektierenden Schicht

Beispiel 3A

15 g der gemäß Beispiel 2A erhaltenen Dispersion werden in einer Silicongummi-Schale bei Zimmertemperatur getrocknet. Man erhält eine leuchtend effektfarbige Schicht von gummiartiger Elastizität. Wird diese in einem Vakuumtrockenschrank 1 Stunde bei 120°C getempert und anschließend auf Zimmertemperatur abgekühlt, so erhöht sich ihre Elastizität noch und es zeigt sich eine leichte Veränderung der Farbe. Beim Dehnen der Schicht ändert sich ihre Farbe mit dem Dehnungsverhältnis von Braun über Grün nach Violett.

Beispiel 3B

135 g der gemäß Beispiel 2A erhaltenen Dispersion werden mit 15 g einer feinteiligen, 20 gew.-%igen wäßrigen Dispersion eines Copolymerisats von 94 Gew.-% Ethylacrylat und 6 Gew.-% Methacrylsäure mit einer mittleren Teilchengröße von 30 nm und einer Glas-temperatur von ca. 0°C gemischt und die Mischung in einer Silicongummi-Schale bei Zimmertemperatur getrocknet. Man erhält eine effektfarbige Schicht, die mechanisch noch stabiler ist als die in Beispiel 3A erhaltene. Das Beispiel veranschaulicht die Erleichterung und Verbesserung der Verfilmung durch den Copolymerzusatz.

Beispiel 3C

20 g der gemäß Beispiel 2A erhaltenen Dispersion werden mit 2 g Diethylenglycoldiethylether (DGDE), gemischt, mit 10 g Wasser verdünnt und die Mischung in einer Silicongummi-Schale bei Zimmertemperatur getrocknet. Man erhält eine leuchtend effektfarbige Schicht, die mechanisch noch stabiler ist als die in Beispiel 3A erhaltene. Das Beispiel zeigt, daß auch der Zusatz des DGDE das Verfilmen der Schalepolymeren bereits bei Zimmertemperatur ermöglicht, dabei aber nur einen geringen Einfluss auf die Farbe der verfilmten Schicht hat.

Beispiel 4

15 g der gemäß Beispiel 2C erhaltenen Dispersion werden in einer Silicongummi-Schale bei Zimmertemperatur durch Verdunstenlassen des Wassers getrocknet. Anschließend wird die erhaltene leuchtend effektfarbige Schicht, in einem Vakuumtrockenschrank 1 Stunde bei 120°C getempert und anschließend auf Zimmertemperatur abgekühlt. Es wird ein harter, mechanisch stabiler, transparenter Film erhalten, der eine leuchtende, mit dem Beleuchtungs- und Betrachtungswinkel veränderliche Farbe aufweist. Durch Zugabe einer feinteiligen weichen Dispersion analog Beispiel 3B und/oder durch Zugabe von Weichmachern analog Beispiel 3C lässt sich die Härte der Schicht nach Bedarf reduzieren, sodaß bei Dehnung der Schichten oder beim Pressen der Schichten Farbveränderungen auftreten analog dem Beispiel 3A.

Beispiel 5

Wird in Beispiel 2 A die Teilchengröße der eingesetzten Saat verändert, d. h. an Stelle der Saat 1A beispielsweise die Saat 1D verwendet, so verschiebt sich der Farbeindruck der analog Beispiel 3A hergestellten Filme in den längerwelligen Bereich des Farbspektrums. Entsprechend wird durch Einsatz eines kleineren Saatpartikels wie beispielsweise Saat 1G der Farbeindruck der analog Beispiel 3 A erhaltenen Schichten in den kürzerwelligen Bereich des Farbspektrums hin verschoben.

Beispiel 6

Emulsionspolymerisat (als Polymerteilchen)

Eine vorgelegte Menge Wasser (465 g) und 6% der Monomeremulsion ME1 werden in einem Pilotrührwerk mit Ankerrührer (100 UpM) unter Stickstoff auf 85°C erhitzt und mit 22% einer Lösung von 4,8 g Natriumpersulfat in 187 g Wasser versetzt. Nach 15 min wird begonnen, die restliche Monomeremulsion ME1 in 2h und den Rest der Initiatorlösung kontinuierlich in 2,25 Stunden zuzuführen. Danach wird der Ansatz noch eine Stunde bei 85°C gehalten, abgekühlt und nacheinander mit jeweils 16 g 10 Gew.-%igen Lösungen von tert-Butylhydroperoxid und Ascorbinsäure versetzt. Die erhaltene koagulat- und stippenfreie Dispersion weist einen PH-Wert von 4,4 einem LD-Wert von 52%, eine gewichtsmittlere Teilchengröße von 236 nm (Lichtstreuung) und einen Feststoffanteil von 39,1% auf. Die Teilchengrößenverteilung ist monodispers mit einem Maximum bei 242 nm und einem P.I. von 0,24 (CHDF).

Zusammensetzung der Monomerenemulsion ME 1

384 g n-Butylacrylat
400 g Acrylnitril
16 g Acrylsäure

14 g Emulgator 2
529 g Wasser.

Beispiel 7

Emulsionspolymerisate (als Matrix oder als Polymerteilchen in Wasser als Matrix)

Eine vorgelegte Menge Wasser (333 g) und 0,5% der Monomeremulsion ME2 werden in einem Pilotrührwerk mit Ankerrührer (100 UpM) unter Stickstoff auf 80°C erhitzt und mit 70g einer 2,5 Gew.-%igen, wäßrigen Lösung von Natriumpersulfat versetzt. Nach 15 min wird begonnen, die restliche Monomeremulsion ME2 und weitere 300 g Initiatorlösung kontinuierlich in 4 Stunden zuzuführen. Danach wird mit 0,25 pphm Wasserstoffperoxid behandelt und im Verlauf einer Stunde mit einer Lösung von 5,6 g Mercaptoethanol in 30 g Wasser versetzt. Nach Abkühlen wird mit konzentrierter AmmoniakLösung ein PH-Wert von 6,8 eingestellt. Das Produkt wird wird über ein 120 , μm-Filter filtriert und ergibt eine mittelviskose, koagulat- und stippenfreie Dispersion mit einem LD-Wert von 24 %, eine gewichtsmittlere Teilchengröße von 550 nm (Lichtstreuung) und einem Feststoffanteil von 60,6%. Die Teilchengrößenverteilung ist monodispers mit einem Maximum bei 440 μm (CHDF). Die Polymerdispersion führt beim Stehen in einem Glasgefäß zu starker Wandkristallisation, erkenntlich an der Ausbildung farbiger, plättchenförmiger, schwer zu störender Kristalle.

Zusammensetzung von ME 2:

1701 g n-Butylacrylat
91 g Acrylnitril
18 g Acrylsäure
122 g N-Methylolmethacrylamid, 15 Gew.-%ig
61 g Emulgator 3
270 g Wasser.

Beispiel 8

Mischung von 2 Emulsionspolymerisaten

50 g der Dispersion aus Beispiel 6 werden mit 10 g der Dispersion aus Beispiel 7 und 20 g Wasser versetzt und 5 min gerührt. Die Mischung wird in einer Kautschukform (14x14 cm) bei 25°C trocknen gelassen. Nach 24 h hat sich ein biegsamer, weißer, undurchsichtiger Film mit starker Oberflächenkristallisation gebildet. Der Film zeigt starke winkelabhängige Interferenzerscheinungen. Beim Tempern (60 Min. bei 60°C) bildet sich eine transparente, gelbe Polymermatrix.

Beispiel 9

20 g der hergestellten Dispersion aus den Beispielen 2A werden unter Rühren mit 10 ml Wasser und 0,4 g einer schwarzen Farben, zum Beispiel Lurazol Schwarz der BASF-Aktiengesellschaft, verwendet als 9,44 gew.%ige wäßrige Lösung, gemischt. Die so hergestellten gefärbten Dispersionen wurden in Silicongummi-Schalen (7 x 15 cm) bei Zimmertemperatur im Verlauf von ca. 48 Stunden getrocknet.

Optische Anzeigen

Beispiel 10

Wird die in Beispiel 3A oder 9 erhaltenen gummiartige 3 μm dicke Schicht von beiden Seiten mit rasterartigen transparenten Elektroden, die auf einer weichen transparenten Kunststofffolie aufgebracht sind, gemäß dem Stand der Technik versehen, und die Rasterpunkte mit einer elektrischen Spannung belegt, so verändert sich die Farbe der Schicht an den mit Spannung versehenen Bereichen. Der Farbeindruck des Displays mit der farbgebenden Schicht aus Beispiel 3A wird dadurch deutlich erhöht, dass die transparente Folie auf einer Seite des Displays durch eine schwarz oder andersfarbig eingefärbte Folie ersetzt wird.

Beispiel 11

Wird die Dicke der farbgebenden Schicht gemäß Beispiel 10 auf die Hälfte reduziert, so kann auch die angelegte elektrische Spannung auf die Hälfte reduziert werden, um einen Farbeindruck zu erzeugen. Von der Auflösung des Bildes, das heißt von der Größe der Rasterpunkte, ist die zur Erreichung eines Farbeindrucks erforderliche angelegte Spannung überraschenderweise fast nicht abhängig.

Beispiel 12

Wird die angelegte elektrische Spannung zeitlich verändert, so verändert sich ebenfalls der Farbeindruck, der durch die farbgebende Schicht erzeugt wird, wobei die zeitliche Verzögerung der Farbveränderung um so geringer wird, je weicher die farbgebende Schicht zwischen den transparenten Elektroden entsprechend den Beispielen 3B, 3C und 4 ist.

**Patentansprüche**

1. Optische Anzeigenelemente, enthaltend eine Schicht aus einem verformbaren Material (Matrix) und diskreten Polymerteilchen, welche gemäß einer definierten Raumgitterstruktur in der Matrix verteilt sind.

2. Optische Anzeigenelemente nach Anspruch 1, **dadurch gekennzeichnet, dass** es sich bei den Polymerteilchen um eine oder mehrere Teilchensorten mit einem mittleren Teilchendurchmesser im Bereich von 0,05 bis 5 μm handelt, wobei jede Teilchensorte einen Polydispersitätsindex (PI) kleiner 0,6 hat, berechnet nach der Formel

$$P.I. = (D90-D10)/D50$$

worin D90, D10 und D50 Teilchendurchmesser bezeichnen, für die gilt:

D 90: 90 Gew % der Gesamtmasse aller Teilchen hat einen Teilchendurchmesser kleiner oder gleich D 90
D 50: 50 Gew % der Gesamtmasse aller Teilchen hat einen Teilchendurchmesser kleiner oder gleich D 50
D 10: 10 Gew % der Gesamtmasse aller Teilchen hat einen Teilchendurchmesser kleiner oder gleich D 10

3. Optische Anzeigenelemente nach Anspruch 1, **dadurch gekennzeichnet, dass** es sich bei den Polymerteilchen um eine Teilchensorte handelt.

4. Optische Anzeigenelemente nach Anspruch 1 oder 2, **dadurch gekennzeichnet, dass** es sich bei den Polymerteilchen um zwei Teilchensorten handelt.

5. Optische Anzeigenelemente nach einem der Ansprüche 1 bis 4 **dadurch gekennzeichnet, dass** die Polymeren, welche die diskreten Polymerteilchen bilden, eine Glasübergangstemperatur größer 30 °C haben.

6. Optische Anzeigenelemente nach einem der Ansprüche 1 bis 5 **dadurch gekennzeichnet, dass** die Polymeren, bzw. Polymerteilchen, zu mindestens 40 Gew. % aus sogenannten Hauptmonomeren, ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C-Atomen und ein oder zwei Doppelbindungen oder Mischungen dieser Monomeren aufgebaut sind.

7. Optische Anzeigenelemente nach einem der Ansprüche 1 bis 6 **dadurch gekennzeichnet, dass** sich die Polymerteilchen und die Matrix im Brechungsindex unterscheiden.

8. Optische Anzeigenelemente nach einem der Ansprüche 1 bis 7 **dadurch gekennzeichnet, dass** der Unterschied im Brechungsindex mindestens 0,01, bevorzugt mindestens 0,1 beträgt.

9. Optische Anzeigenelemente nach einem der Ansprüche 1 bis 8 **dadurch gekennzeichnet, dass** es sich bei der Matrix um eine Verbindung handelt, welche einen Schmelzpunkt oder eine Glasübergangstemperatur unterhalb 20 °C (1 bar) hat.

10. Optische Anzeigenelemente nach einem der Ansprüche 1 bis 9 **dadurch gekennzeichnet, dass** es sich bei der Matrix um eine polymere Verbindung handelt.

**11.** Optische Anzeigenelemente nach einem der Ansprüche 1 bis 10 **dadurch gekennzeichnet, dass** die Polymeren, bzw. Polymerteilchen durch Polymerisation von radikalisch oder metallkatalytisch polymerisierbaren Verbindungen (Monomere) in Wasser in Gegenwart einer oberflächenaktiven Verbindung (Emulsionspolymerisation) erhältlich sind.

**12.** Optische Anzeigenelemente nach einem der Ansprüche 1 bis 11 **dadurch gekennzeichnet, dass** es sich bei den Polymerteilchen um den Kern von Kern/Schale Polymeren handelt und die Matrix durch Verfilmung der Schale gebildet wird.

**13.** Optische Anzeigenelemente nach einem der Ansprüche 1 bis 12, **dadurch gekennzeichnet, dass** der Abstand zwischen den Polymerteilchen so groß wird, dass elektromagnetische Strahlung im Bereich des sichtbaren Lichts reflektiert wird.

**14.** Optische Anzeigenelemente nach einem der Ansprüche 1 bis 13, **dadurch gekennzeichnet, dass** der Abstand zwischen den Polymerteilchen 100 bis 400 Nanometer beträgt.

**15.** Optische Anzeigenelemente nach einem der Ansprüche 1 bis 14, **dadurch gekennzeichnet, dass** die Schicht zwischen zwei Substraten eingebracht ist, wovon mindestens ein Substrat transparent ist.

**16.** Optische Anzeigenelemente nach einem der Ansprüche 1 bis 15, **dadurch gekennzeichnet,dass** ein Substrat eine Lichtdurchlässigkeit kleiner 50 % hat, vorzugsweise schwarz ist.

**17.** Optische Anzeigenelemente nach einem der Ansprüche 1 bis 16, **dadurch gekennzeichnet, dass** die Schicht eingefärbt ist.

**18.** Optische Anzeigenelemente nach einem der Ansprüche 1 bis 17, **dadurch gekennzeichnet, dass** die Dicke der Schicht 1 μm bis 150 μm beträgt.

**19.** Optische Anzeigenelemente nach einem der Ansprüche 1 bis 18, **dadurch gekennzeichnet, dass** die Wellenlänge des reflektierten Lichts durch Änderung des Abstands der Polymerteilchen veränderbar ist.

**20.** Optische Anzeigenelemente nach einem der Ansprüche 1 bis 19, **dadurch gekennzeichnet, dass** der Abstand zwischen den Polymerteilchen thermisch, mechanisch, elektrisch, magnetisch, elektromagnetisch oder durch Ausnutzung des Piezo-Effekts veränderbar ist.

**21.** Optische Anzeigenelemente nach einem der Ansprüche 1 bis 20, **dadurch gekennzeichnet, dass** der Abstand zwischen den Polymerteilchen örtlich und zeitlich kontrolliert veränderbar ist.

**22.** Optische Anzeigenelemente nach einem der Ansprüche 1 bis 21, **dadurch gekennzeichnet, dass** die Gitterabstände durch auf der Ober- und Unterseite der Schicht aufgebrachte, leitfähige Elemente punktweise veränderbar sind.

**23.** Optische Anzeigenelemente nach einem der Ansprüche 1 bis 22, **dadurch gekennzeichnet, dass** auf mindestens einer Seite der Schicht Transistoren aufgebracht sind.

**24.** Verwendung der optischen Anzeigenelemente gemäß einem der Ansprüche 1 bis 23 zur Herstellung eines farbigen Bildes.

**25.** Verwendung der optischen Anzeigenelemente gemäß einem der Ansprüche 1 bis 23 zur Herstellung von farbigen, sich zeitlich verändernden Bildern und von Filmen

**26.** Verwendung der optischen Anzeigenelemente gemäß einem der Ansprüche 1 bis 23 zur Herstellung von monochromatischem Laserlicht

**27.** Verwendung der optischen Anzeigenelemente gemäß einem der Ansprüche 1 bis 23 zur Herstellung von Elementen, die zur wellenlängenabhängigen Kontrolle von Datenüberträgern auf elektromagnetischer Basis geeignet sind.

**28.** Verwendung der optischen Anzeigenelemente gemäß einem der Ansprüche 1 bis 23 zur Herstellung großflächiger Anzeigetafeln, z.B. für Werbung u.ä.

**Europäisches Patentamt**

# EUROPÄISCHER RECHERCHENBERICHT

Nummer der Anmeldung

EP 03 01 3087

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 952 131 A (KUMACHEVA EUGENIA ET AL) 14. September 1999 (1999-09-14) * Spalte 1, Zeile 54-67 * * Spalte 4, Zeile 44 - Spalte 9, Zeile 16; Ansprüche; Beispiele * --- | 1-28 | C08J5/18 C09D151/00 G02B5/128 |
| X | WO 00 74927 A (KUMACHEVA EUGENIA ;KALININA OLGA (CA)) 14. Dezember 2000 (2000-12-14) * Seite 1, Zeile 5-9 * * Seite 2, Zeile 22 - Seite 9, Zeile 17; Ansprüche; Abbildungen; Beispiel * --- | 1-28 | |
| X | US 3 733 371 A (KOBAYASHI Y ET AL) 15. Mai 1973 (1973-05-15) * Spalte 1, Zeile 14-25 * * Spalte 1, Zeile 57 - Spalte 9, Zeile 40; Ansprüche; Beispiele * --- | 1-11, 13-25 | |
| X | KUMACHEVA E ET AL: "THREE-DIMENSIONAL ARRAYS IN POLYMER NANOCOMPOSITES" ADVANCED MATERIALS, VCH VERLAGSGESELLSCHAFT, WEINHEIM, DE, Bd. 11, Nr. 3, 11. Februar 1999 (1999-02-11), Seiten 231-234, XP000803280 ISSN: 0935-9648 * Seite 231, linke Spalte, letzter Absatz - Seite 234, linke Spalte, letzter Absatz; Abbildungen * --- -/-- | 1-28 | **RECHERCHIERTE SACHGEBIETE (Int.Cl.7)** C08J C09D G02B |

Der vorliegende Recherchenbericht wurde für alle Patentansprüche erstellt

| Recherchenort | Abschlußdatum der Recherche | Prüfer |
|---|---|---|
| MÜNCHEN | 22. Juli 2003 | Otegui Rebollo, J |

**Europäisches Patentamt**

## EUROPÄISCHER RECHERCHENBERICHT

Nummer der Anmeldung

EP 03 01 3087

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | KALININA O ET AL: "A CORE-SHELL APPROACH TO PRODUCING 3D POLYMER NANOCOMPOSITES" MACROMOLECULES, AMERICAN CHEMICAL SOCIETY. EASTON, US, Bd. 32, Nr. 12, 1999, Seiten 4122-4129, XP000984727 ISSN: 0024-9297 * Seite 4122, linke Spalte, Absatz 1 * * Seite 4122, linke Spalte, letzter Absatz - Seite 4129, rechte Spalte, Absatz 4 * --- | 1-28 | |
| X | WO 01 62830 A (KUMACHEVA EUGENIA) 30. August 2001 (2001-08-30) * Seite 2, Zeile 6 - Seite 5, Zeile 21; Ansprüche; Abbildungen; Beispiele * --- | 1-28 | |
| X,D | EP 0 955 323 A (BASF AG) 10. November 1999 (1999-11-10) * Seite 2, Zeile 3-12 * * Seite 3, Zeile 31 - Seite 4, Zeile 38 * * Seite 5, Zeile 47-52 * * Seite 6, Zeile 29 - Seite 7, Zeile 39 * * Seite 10, Zeile 28 - Seite 14, Zeile 32; Ansprüche; Abbildung; Beispiele * --- | 1-28 | RECHERCHIERTE SACHGEBIETE (Int.Cl.7) |
| X,P | WO 03 044911 A (LEYRER REINHOLD J ;BASF AG (DE); SCHOEPKE HOLGER (DE); HAMERS CHRI) 30. Mai 2003 (2003-05-30) * Seite 5, Zeile 1 - Seite 24, Zeile 10; Ansprüche; Abbildungen; Beispiel * --- -/-- | 1-28 | |

Der vorliegende Recherchenbericht wurde für alle Patentansprüche erstellt

| Recherchenort | Abschlußdatum der Recherche | Prüfer |
|---|---|---|
| MÜNCHEN | 22. Juli 2003 | Otegui Rebollo, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

**EUROPÄISCHER RECHERCHENBERICHT**

Nummer der Anmeldung

EP 03 01 3087

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,P | WO 03 025035 A (MERCK PATENT GMBH ;ANSELMANN RALF (DE); DOERR HARALD (DE); RUHL TI) 27. März 2003 (2003-03-27)<br>* Seite 1, Absatz 1 *<br>* Seite 5, Absatz 3 - Seite 8, Absatz 1 *<br>* Seite 9, letzter Absatz - Seite 12, Absatz 1 *<br>* Seite 18, Absatz 4 - Seite 20, Absatz 3 *<br>* Seite 24, letzter Absatz - Seite 29, Absatz 3; Ansprüche; Abbildungen; Beispiele *<br>----- | 1-28 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| MÜNCHEN | 22. Juli 2003 | Otegui Rebollo, J |

## ANHANG ZUM EUROPÄISCHEN RECHERCHENBERICHT
## ÜBER DIE EUROPÄISCHE PATENTANMELDUNG NR.

EP 03 01 3087

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 5952131 | A | 14-09-1999 | US | 6214500 B1 | 10-04-2001 |
| WO 0074927 | A | 14-12-2000 | US | 6325957 B1 | 04-12-2001 |
| | | | AU | 5203700 A | 28-12-2000 |
| | | | WO | 0074927 A1 | 14-12-2000 |
| | | | CA | 2375131 A1 | 14-12-2000 |
| | | | EP | 1226020 A1 | 31-07-2002 |
| | | | JP | 2003501238 T | 14-01-2003 |
| US 3733371 | A | 15-05-1973 | JP | 48044652 B | 26-12-1973 |
| | | | DE | 2114682 A1 | 02-12-1971 |
| | | | FR | 2087955 A5 | 31-12-1971 |
| | | | GB | 1353392 A | 15-05-1974 |
| WO 0162830 | A | 30-08-2001 | AU | 3528301 A | 03-09-2001 |
| | | | WO | 0162830 A2 | 30-08-2001 |
| | | | CA | 2400539 A1 | 30-08-2001 |
| EP 0955323 | A | 10-11-1999 | DE | 19820302 A1 | 24-02-2000 |
| | | | EP | 0955323 A1 | 10-11-1999 |
| | | | JP | 2000026551 A | 25-01-2000 |
| | | | US | 6337131 B1 | 08-01-2002 |
| WO 03044911 | A | 30-05-2003 | DE | 10156842 A1 | 28-05-2003 |
| | | | WO | 03044911 A2 | 30-05-2003 |
| WO 03025035 | A | 27-03-2003 | DE | 10228228 A1 | 03-04-2003 |
| | | | WO | 03025035 A2 | 27-03-2003 |

EPO FORM P0461

Für nähere Einzelheiten zu diesem Anhang : siehe Amtsblatt des Europäischen Patentamts, Nr.12/82